# EUROPEAN PATENT APPLICATION

(11) **EP 2 953 253 A1**
(43) Date of publication of application: **09.12.2015**
(21) Application number: 13874145.9
(22) Date of filing: 15.10.2013
(51) Int. Cl.: H02M 7/48, H02P 27/06

(54) **INVERTER CONTROL DEVICE AND PERIPHERAL DEVICE THEREOF**

(30) Priority: 30.01.2013 JP 2013015160
(71) Applicant: Fuji Electric Co., Ltd., Kawasaki-shi, Kanagawa 210-9530 (JP)
(72) Inventor: SATO, Yoshinobu, Kawasaki-shi Kanagawa 210-9530 (JP); HIGUCHI, Shinichi, Kawasaki-shi Kanagawa 210-9530 (JP); MIGAKI, Takumi, Kawasaki-shi Kanagawa 210-9530 (JP)
(74) Representative: Appelt, Christian W.
(86) International application number: PCT/JP2013/077900
(87) International publication number: WO 2014/119054

(57) **Abstract**

Provided is an inverter control device capable of high-speed application of results of computation for a PLC portion to the operation control of an inverter without use of a high-end CPU. A drive control means 1 operates an inverter on the basis of input data and the operation state of the inverter. A computation means 6 carries out computation using the externally input data through an external input means 2, data output from the drive control means 1, data stored in a parameter means 4 or data output from a communication means 5, and supplies the results of the computation to the drive control means 1. In the inverter device 9, the processor that acts as the drive control means 1 is synchronized with a processing cycle corresponding to the control cycle of the drive control means 1 and carries out the computations of the computation means 6.

## Description

### Technical Field

The present invention relates to an inverter control device that operates an inverter according to an input signal from the outside and outputs an operation state thereof to the outside as an output signal.

### Background Art

A programmable logic controller (PLC) is frequently arranged as a host device of the inverter control device in a case where an inverter control device that performs variable speed operations and the like of a motor is used incorporated into a mechanical device or the like. The PLC provides operation commands to the inverter control device while monitoring an operation state of the inverter in order to realize necessary operations. PTL 1 proposes an inverter device in which such a PLC function is built-in.

### Citation List

### Patent Literature

PTL 1: Japanese Unexamined Patent Application Publication No. 2007-68292

### Summary of Invention

### Technical Problem

Incidentally, in the inverter device disclosed in PTL 1, an inverter operation portion and a PLC portion in the inverter control device are independent. Accordingly, in order for the results calculated in the PLC portion to be applied to the operation portion of the inverter, a mechanism is necessary for the processing of the PLC portion and the processing of the operation portion of the inverter to be synchronized. Therefore, there are problems of the processing of the inverter device becoming complicated, and a high-end CPU being necessary in the inverter control device.

The invention is made in view of the above circumstance, and an object thereof is to provide an inverter control device capable of high-speed application of the results of computation for a PLC portion to the operation control of an inverter without use of a high-end CPU.

### Solution to Problem

The invention provides an inverter control device including: drive control means for repeatedly performing operation control of an inverter based on input data and an operation state of the inverter in synchronization with a control cycle; external input means for making an externally input signal into input data of the drive control means; external output means for externally outputting output data of the drive control means; parameter means for storing data used by the drive control means for operation control of the inverter; communication means for performing communication for externally inputting and outputting commands for inverter control and a state quantity of the inverter; and computation means for carrying out computation process using externally input data via the external input means, data output from the drive control means, data stored in the parameter means or data output by the communication means, and supplying processing results thereof to the drive control means, wherein processing means for carrying out the drive control means carries out processing of the computation means in synchronization with the processing cycle set to an integer multiple of the control cycle of the drive control means.

According to the invention, since the processing means for carrying out the drive control means carries out processing of the computation means in synchronization with the processing cycle set to an integer multiple of the control cycle of the drive control means, and the processing results of the computation means are supplied to the drive control means, high speed application of the results of the processing of the computation means to be reflected in the processing of the drive control means (that is, the operation control of the inverter) is possible. Since the processing means for carrying out the drive control means carries out processing of the computation means in synchronization with the processing cycle set to an integer multiple of the control cycle of the drive control means, a special mechanism by which the processing of the drive control means and the processing of the computation means are synchronized is unnecessary.

In a preferable aspect, the processing means has a function of calculating a necessary time for processing of the computation means from a type and number of computation process carried out by the computation means, processing time for each type of computation process stored in advance and an integer multiple that is a comparison of the processing cycle and the control cycle, and outputting a warning in a case where the necessary time exceeds the time set in advance.

According to the aspect, since a warning is output in a case where the processing time of the processing carried out by the computation means exceeds the time set in advance, it is possible to provide a user with the chance to review a content and processing cycle of the processing carried out by the computation means.

In a preferable aspect, a peripheral device of the inverter control device includes a function of calculating a necessary time for processing of the computation means from a type and number of computation processes carried out by the computation means, a processing time for each type of computation process stored in advance, and an integer multiple that is a ratio of the processing cycle and the control cycle, and outputting a warning in a case where the necessary time exceeds the time set in advance.

In the aspect, since a warning is output in a case where the processing time of the processing carried out by the computation means exceeds the time set in advance, it is possible to provide a user with the chance to review a content and processing cycle of the processing carried out by the computation means.

### Brief Description of Drawings

[Fig. 1] Fig. 1 is a block diagram showing the configuration of an inverter control device that is an embodiment of the invention.
[Fig. 2] Fig. 2 is a diagram showing the inverter control device and a peripheral device thereof of the embodiment.
[Fig. 3] Fig. 3 is a diagram showing a configuration of Process 1 that is an example of processing carried out by the computation means 6 in the embodiment.
[Fig. 4] Fig. 4 is a diagram showing a configuration of Process 2 that is an example of processing carried out by the computation means 6 in the embodiment.
[Fig. 5] Fig. 5 is a diagram showing a configuration of Process 3 that is an example of processing carried out by the computation means 6 in the embodiment.
[Fig. 6] Fig. 6 is a diagram showing processing configuration information of Process 1 in the embodiment.
[Fig. 7] Fig. 7 is a diagram showing processing configuration information of Process 2 in the embodiment.
[Fig. 8] Fig. 8 is a diagram showing processing configuration information of Process 3 in the embodiment.
[Fig. 9] Fig. 9 is a flowchart showing the operation of the embodiment.
[Fig. 10] Fig. 10 is a flowchart showing a setting operation of a processing cycle in another embodiment of the invention.

### Description of Embodiments

Below, embodiments of the invention will be described with reference to the drawings.

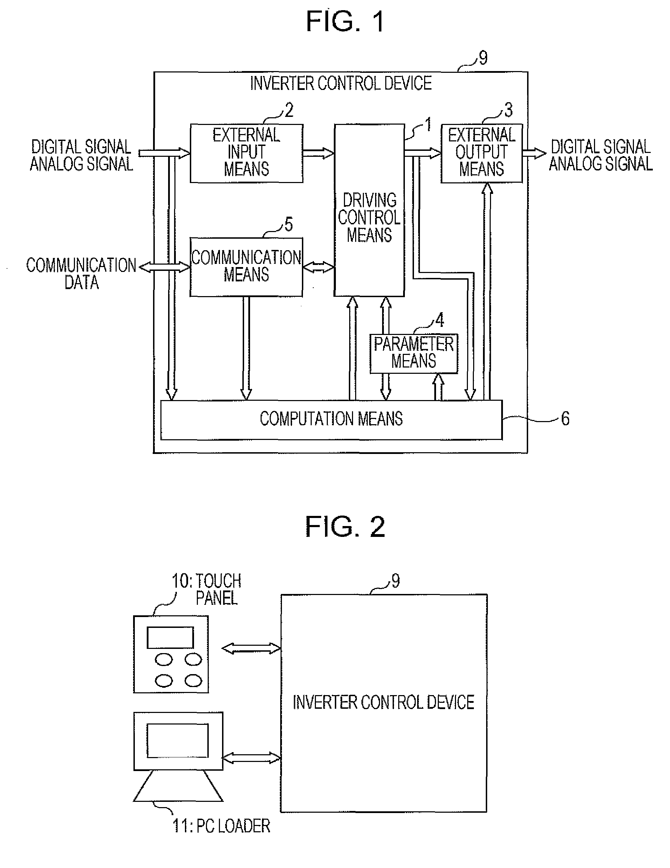

Fig. 1 is a block diagram showing the configuration of an inverter control device 9 that is an embodiment of the invention. As shown in Fig. 1, the inverter control device 9 includes drive control means 1, external input means 2, external output means 3, parameter means 4, communication means 5, and computation means 6. Each of these means is a program carried out by a processor provided in the inverter control device 9. That is, the inverter control device 9 according to the embodiment carries out processing of each means shown in Fig. 1 using shared calculation resources.

In the preferable aspect, a touch panel 10 and a PC loader 11 are used as peripheral devices along with the inverter control device 9, as shown in Fig. 2. The peripheral devices are used as means for setting parameters for the inverter control device 9. The parameter settings of the inverter control device using the peripheral device will be described later.

In Fig. 1, the drive control means 1 is means for performing operation of the inverter on the basis of an input signal and an operation state of the inverter. Here, operation commands such as torque command values that indicate the torque to be generated by the motor that is a load on the inverter and speed command values that indicate a rotation speed are included in the input signal. The inverter operation specifically indicates pulse width moduration (PWM) control of a gate signal applied to a switching element connected to a motor in the inverter. The processor provided in the inverter control device 9 carries out processing as the drive control means 1 in synchronization with the predetermined control cycle.

The external input means 2 is means for making an externally provided digital signal or analog signal an input signal to the drive control means 1. The external output means 3 is means for outputting a digital signal or an analog signal output by the drive control means 1 to the outside. The parameter means 4 is means that stores parameters referenced by the drive control means 1 in order to control the operation of the inverter. The parameter means 4 includes a nonvolatile memory able to be electrically re-written, such as an EEPROM, and a volatile memory, such as a RAM. The communication means 5 is means for performing communication for input and output with the outside of operation commands to be input to the drive control means 1, an operation state of the inverter obtained from the drive control means 1, and a state quantity such as an output frequency or a current.

The computation means 6 executes a numerical value computation process such as edge detection processing that performs detection of a rising edge or falling edge, signal delay processing, logical computation processing, comparison processing or basic arithmetic operations with respect to signal data input to the external input means 2, signal data output from the drive control means 1, signal data stored in the parameter means 4, or signal data output by the communication means 5, and allows processing results thereof to be supplied as input signals to the drive control means 1 or the external output means 3, or stored in the parameter means 4.

In the embodiment, the drive control means 1 includes processing means that performs time management of the computation means 6, external input means 2, external output means 3, and communication means 5, and controls each of these means. The processing means of the drive control means 1 makes the computation means 6 carry out processing in synchronization with the processing cycle set as an integer multiple of a control cycle of the drive control means 1.

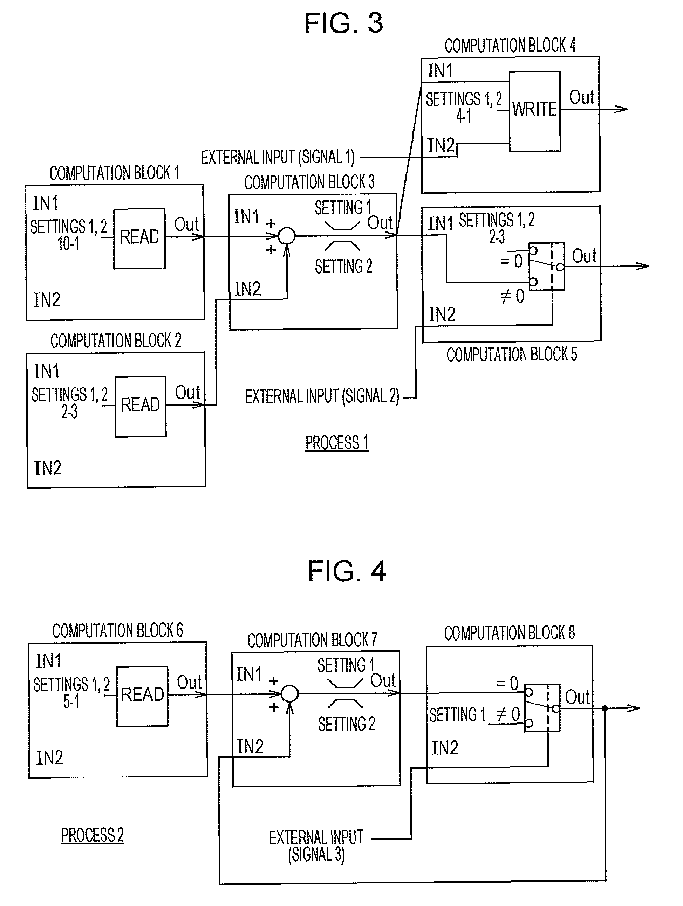

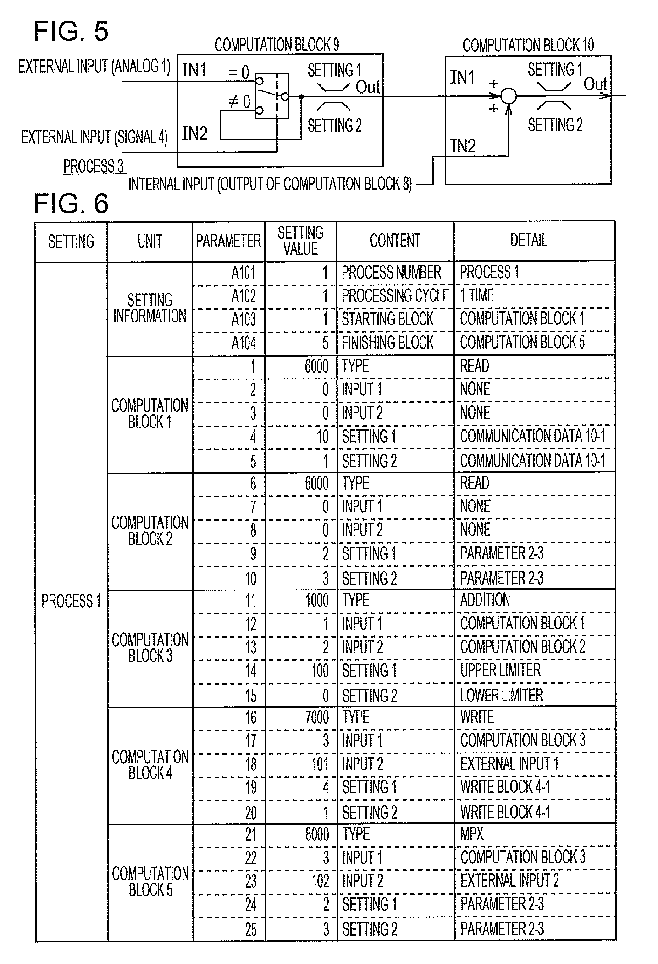

Figs. 3 to 5 are diagrams showing a configuration of Processes 1 to 3 that are examples of the processing carried out by the computation means 6 in the embodiment. Figs. 6 to 8 are drawings showing an example of processing configuration information in which the configuration of Processes 1 to 3 are defined. The processing configuration information of Processes 1 to 3 is stored in advance in a memory, not shown. The processing means of the drive control means 1 performs control for making the computation means 6 execute each of Processes 1 to 3 at a processing cycle set for each processing by referencing the processing configuration information.

As shown in Figs. 6 to 8, each piece of processing configuration information that defines Processes 1 to 3 is formed from one or a plurality of computation blocks.

Here, each computation block defines the content of the computation process carried out by the computation means 6, specifically the type of computation process, the input origin of the input data of the computation process, and the setting value of the computation process. One processing is configured by one or a plurality of computation processes. The processing configuration information in which one processing is defined includes a computation block for each computation process that configures the processing.

One computation block includes five parameters. A first parameter defines the type of computation process, a second parameter Input 1, a third parameter Input 2, a fourth parameter Setting 1, and a fifth parameter Setting 2. Inputs 1 and 2 indicate first and second input data used in the computation process. Settings 1 and 2 change in definition according to the type of computation process. In a case of a READ or WRITE calculation, the combination of Settings 1 and 2 designates the read destination or write destination of the data. In a case where the calculation is addition, Setting 1 is an upper limiter of the addition results, and Setting 2 is a lower limiter of the addition results.

Setting information is formed from the four parameters of setting number, the processing cycle, starting block and finishing block. The setting number in each processing configuration information item is the number of the processing defined by the processing configuration information. The processing cycle is a parameter that indicates how many times the control cycle the processing cycle of the processing defined by the processing configuration information is. In the embodiment, the processing cycle is set to an integer multiple of the control cycle. Therefore, the parameter of the processing cycle is an integer multiple value. However, in a case where 0 is set as the processing cycle, the 0 designates that the processing defined by the processing configuration information is not executed. The starting block is the number of the initial computation block in the processing defined by the processing configuration information. The finishing block is the number of the final computation block in the processing defined by the processing configuration information.

In the embodiment, the processing means of the drive control means 1 determines if the computation process of any computation blocks of any processing is carried out in any of the control cycles by referencing the processing configuration information for the above Processes 1 to 3, and Processes 1 to 3 are carried out by the computation means 6 in synchronization with the processing cycle set to an integer multiple of the control cycle.

Next, the content of Processes 1 to 3 defined by the processing configuration information shown in Figs. 6 to 8 will be described with reference to Figs. 3 to 5.

In Computation block 1 in the processing configuration information of Process 1 in Fig. 6, the type is 6000 that indicates READ, Input 1 is 0 that indicates no input, Input 2 is 0 that indicates no input, Setting 1 is 10 that indicates Communication data 10 of the communication means 5, and Setting 2 is 1 that indicates a first data thereof. Therefore, the computation means 6 reads out Communication data 10-1 from the communication means 5 in carrying out of Computation block 1, as shown in Fig. 3.

In Computation block 2 in the processing configuration information of Process 1 in Fig. 6, the type is 6000 that indicates READ, Input 1 is 0 that indicates no input, Input 2 is 0 that indicates no input, Setting 1 is 2 that indicates Parameter 2 of the parameter means 4, and Setting 2 is 3 that indicates a third parameter thereof. Therefore, the computation means 6 reads out Parameter 2-3 from the parameter means 4 in carrying out of Computation block 2, as shown in Fig. 3.

In Computation block 3 in the processing configuration information of Process 1 in Fig. 6, the type is 1000 that indicates addition, Input 1 is 1 that indicates Computation block 1, Input 2 is 2 that indicates Computation block 2, Setting 1 is 100 that indicates the value of an upper limiter, and Setting 2 is 0 that indicates the value of a lower limiter. Therefore, the computation means 6 sets the upper limiter to 100 and the lower limiter to 0 in carrying out of Computation block 3 as shown in Fig. 3, and performs addition of the output data of Computation block 1 and the output data of Computation block 2.

In Computation block 4 in the processing configuration information of Process 1 in Fig. 6, the type is 7000 that indicates WRITE, Input 1 is 3 that indicates Computation block 3, Input 2 is 101 that indicates Signal 1 of the external input means 2. Settings 1 and 2 are 4 and 1 that indicate Parameter 4-1 stored in a nonvolatile memory of the parameter means 4. Therefore, in carrying out of Computation block 4, as shown in Fig. 3, the computation means 6 stores the output data of Computation block 3 as Parameter 4-1 in the nonvolatile memory of the parameter means 4 at the rising timing of Signal 1 of the external input means 2.

In Computation block 5 in the processing configuration information of Process 1 in Fig. 6, the type is 8000 that indicates MPX, Input 1 is 3 that indicates Computation block 3, Input 2 is 102 that indicates Signal 2 of the external input means 2, and Settings 1 and 2 are 2 and 3 that indicate Parameter 2-3. Therefore, the computation means 6 outputs Parameter 2-3 stored in the parameter means 4 in a case where Signal 2 of the external input means 2 is 0, and the output data of Computation block 3 in a case where other than 0 in carrying out of Computation block 5 as shown in Fig. 3.

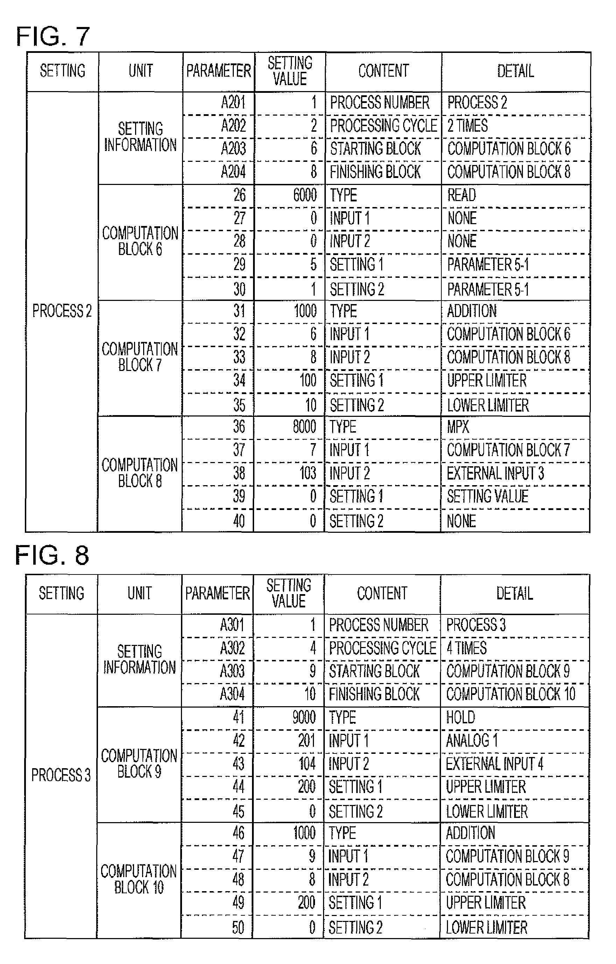

In Computation block 6 in the processing configuration information of Process 2 in Fig. 7, the type is 6000 that indicates READ, Input 1 is 0 that indicates no input, Input 2 is 0 that indicates no input, Setting 1 is 2 that indicates Parameter 5 held by the parameter means, and Setting 2 is 1 that indicates the first parameter thereof. Therefore, the computation means 6 reads out Parameter 5-1 from the parameter means 4 in carrying out of Computation block 6, as shown in Fig. 4.

In Computation block 7 in the processing configuration information of Process 2 in Fig. 7, the type is 1000 that indicates addition, Input 1 is 6 that indicates Computation block 6, Input 2 is 8 that indicates Computation block 8, Setting 1 is 100 that indicates the value of the upper limiter, and Setting 2 is 0 that indicates the value of the lower limiter. Therefore, the computation means 6 sets the upper limiter to 100 and the lower limiter to 0 in carrying out of Computation block 7 as shown in Fig. 4, and performs addition of the output data of Computation block 6 and the output data of Computation block 8.

In Computation block 8 in the processing configuration information of Process 2 in Fig. 7, the type is 4001 that indicates switching, Input 1 is 7 that indicates Computation block 7, Input 2 is 103 that indicates External input 3, Setting 1 is 0 that indicates the setting value 0, and Setting 2 is 0 that designates no function. Therefore, the computation means 6 outputs Computation block 7 when External input 3 is 0 and outputs the setting value 0 when External input 3 is not 0, in carrying out of Computation block 8, as shown in Fig. 4.

In Computation block 9 in the processing configuration information of Process 3 in Fig. 8, the type is 4100 that indicates holding of the value, Input 1 is 201 that indicates Analog 1 of the external input, Input 2 is 104 that indicates External input 4, Setting 1 is 200 that indicates the value of the upper limiter, and Setting 2 is 0 that indicates the value of the lower limiter. Therefore, the computation means 6 outputs the value of Analog 1 of the external input when External input 4 is 0 and holds and outputs the previously output value when External input 4 is not 0, in carrying out of Computation block 9, as shown in Fig. 5.

In Computation block 10 in the processing configuration information of Process 3 in Fig. 8, the type is 1000 that indicates addition, Input 1 is 9 that indicates Computation block 9, Input 2 is 8 that indicates Computation block 8, Setting 1 is 200 that indicates the value of the upper limiter, and Setting 2 is 0 that indicates the value of the lower limiter. Therefore, the computation means 6 sets the upper limiter to 200 and the lower limiter to 0 in carrying out of Computation block 10 as shown in Fig. 5, and performs addition of the output data of Computation block 9 and the output data of Computation block 8.

The output data of Computation block 5 and the output data of Computation block 10 are transferred to another computation block, not shown. The computation block which receives the output data of Computation block 5 may store the output data of Computation block 5 in the parameter means 4 as Parameter 2-3, or may carry out further calculation such as addition on the output data of Computation block 5. In the former case, Communication data 10-1 of the communication means 5 is added with respect to Parameter 2-3 for each time the processing cycle is repeated. Accordingly, application of external communication data to the inverter control is possible without using the external input means 2 or the external output means 3.

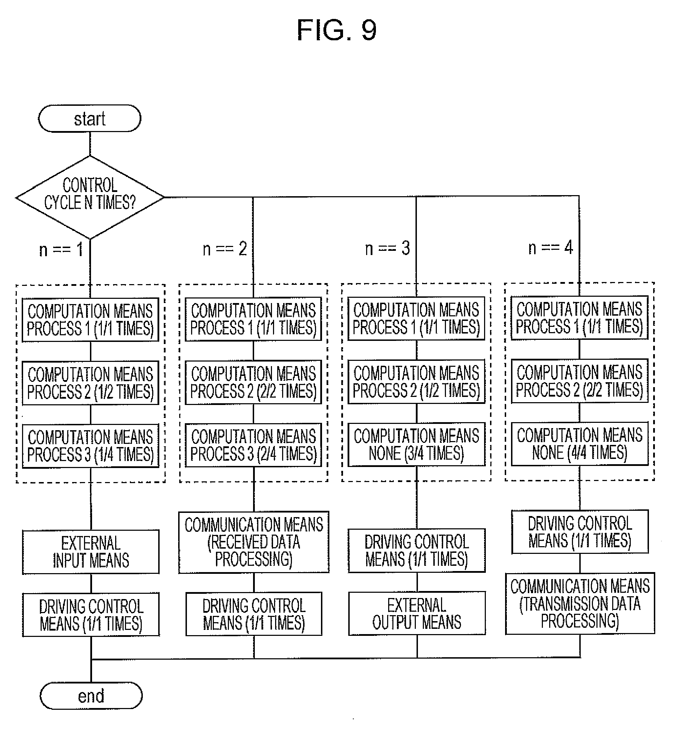

In the embodiment, the processing means for carrying out the drive control means 1 synchronizes with the processing cycle set to an integer multiple of the control cycle by the setting information of the processing configuration information, and performs the processing of the computation block from the starting block to the finishing block of each Processes 1 to 3. Fig. 9 is a flowchart showing a processing flow of processing means of the drive control means 1.

The inverter control device 9 carries out the respective processes of the external input means 2, external output means 3, parameter means 4, communication means 5, and computation means 6 in synchronization with a cycle corresponding to the control cycle for carrying out the drive control means 1, specifically a cycle with an integer multiple of the control cycle. Here, the drive control means 1 that performs operation control of the inverter is necessary for processing at high speeds, and is necessarily operated in each control cycle. In contrast, the external input means 2, external output means 3, parameter means 4, and communication means 5 may be carried out at each cycle thinned from the cycle in which the drive control means 1 is carried out in order to process at low speeds. Although the computation means 6 performs computation at the cycle in which the drive control means 1 is originally carried out, it is necessary to make the computation means 6 perform at a cycle within the constraints on the computation capacity of the inverter control device 9.

Thus, in the embodiment, the processing means of the drive control means 1 counts the number of times the control cycle is switched, and obtains the number of times n of the control cycle on the basis of the count value thereof. Specifically, n is obtained by obtaining the least common multiple m of each integer that shows how many times the control cycle the processing cycle of each processing carried out by the computation means 6 is, and adding 1 to the remainder when the count value of the control cycle is divided by m. In the example, since the processing cycle of Process 1 is one time the control cycle, the processing cycle of Process 2 is two times the control cycle, and the processing cycle of Process 3 is four times the control cycle, m is 4 that the least common multiple of 1, 2, and 4. Accordingly, the value of adding 1 to the remainder where the count value of the control cycle is divided by m = 4 is n, thus n is a value of 1 to 4. The processing means of the drive control means 1 determines the computation block carried out by the computation means 6 based on n in each control cycle.

When described in further detail, the processing means of the drive control means 1 calculates the number of computation blocks (number of ends rounded up) per control cycle for each Process 1 to 3 according to formula 1. number of computation blocks = (finishing block - starting block + 1) / processing cycle formula 1

The processing means of the drive control means 1 determines the computation block carried out by the computation means 6 in each control cycle based on the number of each processing block calculated for Processes 1 to 3.

For example, in a case of Process 1, since the finishing block in the setting information is 5, the starting block is 1, and the processing cycle is 1, the number of processing blocks is 5. Accordingly, the processing means of the drive control means 1 makes the computation means perform the processing of the five blocks from Computation block 1 to Computation block 5 in each control cycle for n = 1 to 4.

In a case of Process 2, since the finishing block in the setting information is 8, the starting block is 6, and the processing cycle is 2, the number of processing blocks is 2. Thus, the processing means of the drive control means 1 makes the computation means 6 perform the processing of the two blocks from Computation block 6 to Computation block 7 in the n = 1 control cycle. Next, in the n = 2 control cycle, although the processing of 2 blocks from Computation block 8 is carried out, since Computation block 8 is the finishing block, only the processing of Computation block 8 is carried out by the computation means 6.

In a case of Process 3, since the finishing block in the setting information is 10, the starting block is 9, and the processing cycle is 4, the number of processing blocks is 1. The processing means of the drive control means 1 makes the computation means 6 perform the processing of Computation block 9 in the n = 1 control cycle and the processing of Computation block 10 in the n = 2 control cycle, and, because the finishing block is reached in the n = 3 and 4 control cycle, the processing means of the drive control means 1 makes the computation means 6 not perform processing.

The processing means for carrying out the drive control means 1 makes the computation means 6 perform processing 1 to 3 at each processing cycle designated as an integer multiple of the control cycle according to the setting information as described above.

When focusing on the results in which the control is implemented as above, for example, Process 1, the carrying out form thereof becomes as follows. In the period in which Signal 1 from the external input means 2 is 0, Parameter 2-3 stored in the parameter means 4 is selected and output (Computation block 5) by Computation blocks 1 to 5 being carried out in each processing cycle (=each control cycle).

When Signal 2 from the external input means 2 is 1, Parameter 2-3 and Parameter 10-1 of the communication means 5 stored in the parameter means 4 are added (Computation blocks 1 to 3) by Computation blocks 1 to 5 being carried out in each processing cycle and the results of addition are selected as output (Computation block 5). Accordingly, when Parameter 10-1 of the communication means 5 varies, the variations thereof are directly applied to the computation process of the computation means 6.

In the related art, in a case where it is necessary for the parameter used in inverter control to be varied according to the external commands, the parameters thereof are externally read out from the parameter means 4 via the external output means 3, and processed externally according to the commands. The post-processing parameters are stored in the parameter means 4 via the external input means 2. In this case, a delay arises due to using the external output means 3 and the external input means 2, and high-speed inverter control is difficult.

In contrast, in the embodiment, the computation means 6 carries out processing in which the parameter is read out from the parameter means 4, subjected to some processing, and reflected in the inverter control, without using the external output means 3 and the external input means 2. Accordingly, according to the embodiment, high speed inverter control is possible compared to the related art.

In the embodiment, when Signal 1 of the external input means 2 rises from 0 to 1, the output data of Computation block 3 (that is, results in which Communication parameter 10-1 of the communication means 5 is added to Parameter 2-3) is stored as Parameter 4-1 in the parameter means 4 at the point in time of the rising thereof.

Accordingly, if configured so that Signal 1 of the external input means 2 falls from 0 to 1 in a case where there is a power outage, it is possible for an arbitrary parameter (Parameter 2-3 in this example) to be saved as Parameter 4-1 during the power outage.

Although not shown in the drawings, it is possible to realize recovery of the parameters during recovery of a power source. That is, the computation block that stores Parameter 4-1 as Parameter 2-3 when Signal 1 of the external input means 2 falls from 1 to 0 is provided, along with being configured so that Signal 1 of the external input means 2 falls from 1 to 0 in a case where the power source is recovered. By doing so, it is possible for Parameter 2-3 saved as Parameter 4-1 during the power outage to be recovered as Parameter 2-3 when the power source recovers.

The above are examples of carrying out forms of Process 1.

The processing means for carrying out the drive control means 1, as shown in Fig. 9 allows Process 1 for which high speed is demanded to be carried out in synchronization with the same processing cycle as the control cycle, and allows Processes 2 and 3 for which high speed is not demanded to be carried out in synchronization with a processing cycle which is an integer multiple of 2 or more times the control cycle. The reason therefor is as follows.

In the inverter control device 9, since it is necessary for the physical quantities such as the voltage, current and frequency of the inverter to be processed at high speeds, it is necessary for the processing cycle for performing the processing to be shortened. However, since high-speed processing is unnecessary for the man-machine interface, the processing cycle for performing the processing may be lengthened. Since the processing means for carrying out the drive control means 1 in the embodiment is synchronized to the processing cycle set to an integer multiple of the control cycle according to the setting information, as shown in Fig. 9, and each processing is carried out by the computation means 6, it is possible for the processing cycle to be optimized according to the high speed demanded in the processing.

However, because the number of processing blocks per processing cycle or control cycle is different for each processing, there is a problem of not understanding if the processing cycle of the computation block in one control cycle falls within the processing time permitted within one control cycle. Thus, in the processing means of the drive control means 1, the processing time of all computation blocks is obtained for each of the n = 1 to 4 control cycles by performing the computation shown in formula 2. processing time (n) of all computation blocks in nth control cycle = E (usage count for each type of computation block x processing time for each type of computation block) formula 2

The sum of the processing time of the computation blocks of Processes 1, 2, and 3 carried out in the n-th control cycle is obtained in formula 2. In each of Processes 1 to 3, a plurality of types of computation blocks are carried out. The processing means of the drive control means 1 selects the computation block carried out in the nth control cycle from among the computation blocks, and classifies the selected computation block for each type. The usage count in the nth control cycle is obtained for each type of computation block, the processing time of the computation block is multiplied by the usage count, and the total processing time is calculated for each type of computation block in the nth control cycle. The processing time of all computation blocks in the nth control cycle is calculated by totaling the total processing time for each type of computation block obtained in this way.

In formula 2, the usage count for each type of computation block is obtained by counting the number of computation blocks from the computation blocks included in the processing configuration information of Processes 1 to 3, the computation block being carried out in the nth control cycle for each type of computation block. The processing time set for each type of computation block uses the value stored in advance in the memory.

The processing means of the drive control means 1 outputs a warning when the processing time (n) exceeds a time able to be processed set in advance. Thus, a user is able to review the settings of the processing configuration information, and correct the processing configuration information in the memory to valid information.

As shown in Fig. 2, in the form in which the touch panel 10 or the PC loader 11 that is a peripheral equipment is used along with the inverter control device 9, the configuration may be formed so that setting of the processing configuration information is performed by a peripheral device. In this case, when the user uses the peripheral device, and performs setting of the processing configuration information in the memory of the inverter control device 9 (not shown), the peripheral device calculates the processing time (n) using formulae 1 and 2, and performs a warning in a case where the processing time (n) does not fall within the processing time able to be carried out within one control cycle. By doing so, it is possible for errors in the processing configuration information to be found and a user to command a review thereof.

In a case where a warning is raised, the user may increase the setting of the processing cycle from 2 to 4 times, or may change the computation block. In this case, the peripheral device again performs computation of formula 2 and performs a re-determination of whether the processing time (n) falls within the processing time able to be carried out within one control cycle. Accordingly, it is possible for the validity of corrections of the processing cycle or the computation block to be easily confirmed.

As described above, according to the embodiment, since the processor for carrying out processing as the drive control means 1 carries out processing of the computation means 6 in synchronization with the processing cycle set to an integer multiple of the control cycle of the drive control means 1, and the results of the processing of computation means 6 are supplied to the drive control means 1, high speed application of the results of the processing of the computation means 6 to the processing of the drive control means 1 (that is, the operation control of the inverter) is possible. Since the processor for carrying out processing as a drive control means 1 carries out processing of the computation means 6 in synchronization with the processing cycle according to the control cycle of the drive control means 1, a special mechanism by which the processing of the drive control means 1 and the processing of the computation means 6 are synchronized is unnecessary. Accordingly, it is possible for an inverter control device capable of high-speed application of the results of computation for a PLC portion to the operation control of an inverter without use of a high-end CPU to be realized with a simple configuration. According to the configuration, it is possible for the results of the computation by the computation means 6 to be saved in the parameter means 4 according to variations in the signal from the external input means 2. Accordingly, the saving function is used, for example, the results of computation are saved in the parameter means 4 during a power outage, and the saved results of computation are read out during recovery of a power source. It is possible to perform processing such as continuing the computation process from the state before the power outage. According to the embodiment, since it is possible for an arbitrary cycle that is an integer multiple of the control cycle to be the processing cycle, a processing cycle with an appropriate length is set according to the demand pertaining to the high speed of the control, and the computation block group for realizing the PLC portion is carried out by the computation means 6. According to the embodiment, since a warning is output in a case where the processing time of the computation block to be carried out in the control cycle does not fall within the processing time able to be carried out in one control cycle, it is possible for a user to be notified of this case and for the configuration of the processing and the processing cycle to be corrected to valid content in a case where the configuration of the processing carried out by the computation means or the processing cycle is invalid.

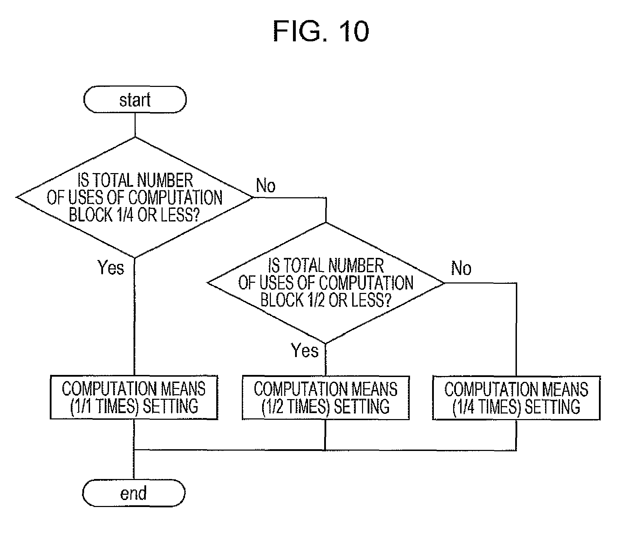

Above, although one embodiment of the invention was described, other embodiments are considered to be included in the invention. Examples are as follows.
(1) In the above embodiment, the processing means in which various processings are carried out in the computation means 6 in synchronization with the processing cycle set to an integer multiple of the control cycle is provided in the drive control means 1; however, the processing means may be configured as a separate program to the drive control means 1, and may be carried out by the processor of the inverter control device 9.
(2) In the above embodiment, the processing cycle is designated by the setting information for each of a plurality of processings carried out by the computation means 6. However, instead of doing so, one type of processing cycle may be automatically set for all processing carried out by the computation means 6. That is, the processing cycle is determined according to the number of computation blocks in a situation where the processing cycle is lengthened in a case where the number of computation blocks of the processing carried out by the computation means 6 is low, and the processing cycle is shortened in a case where the number of computation blocks is high. Fig. 10 is a flowchart showing an operation of automatically setting the processing cycle. In the example shown in Fig. 10, it is determined whether the number of computation blocks that are processing targets of the computation means 6 is 1/4 or less of the maximum value of the number of computation blocks able to be provided in the inverter control device 9. In a case where the results of the determination are "YES", one control cycle is made to be the processing cycle of the computation means 6. In a case where the results of the determination are "NO", it is determined whether the number of computation blocks that are processing targets of the computation means 6 is 1/2 or less of the maximum value of the number of computation blocks able to be provided in the inverter control device 9. In a case where the results of the determination are "YES", two control cycles are made to be the processing cycle of the computation means 6. In a case where the results of the determination are "NO", four control cycles are made to be the processing cycle of the computation means 6.

According to the form, since the processing cycle is automatically set according to the number of computation blocks used by the computation means 6, the user is released from an operation for setting of the processing cycle.

### Reference Signs List

- 9: inverter control device
- 2: external input means
- 3: external output means
- 4: parameter means
- 5: communication means
- 6: computation means

## Claims

1. An inverter control device comprising:
drive control means for repeatedly performing operation control of an inverter based on input data and an operation state of the inverter in synchronization with a control cycle;
external input means for making an externally input signal into input data of the drive control means;
external output means for externally outputting output data of the drive control means;
parameter means for storing data used by the drive control means for operation control of the inverter;
communication means for performing communication for externally inputting and outputting commands for inverter control and a state quantity of the inverter; and
computation means for carrying out computation process using externally input data via the external input means, data output from the drive control means, data stored in the parameter means or data output by the communication means, and supplying processing results thereof to the drive control means,
wherein processing means for carrying out the drive control means carries out processing of the computation means in synchronization with the processing cycle set to an integer multiple of the control cycle of the drive control means.

2. The inverter control device according to claim 1,
wherein the processing means carries out each processing of the external input means, the external output means and the communication means in synchronization with a cycle corresponding to the control cycle of the drive control means.

3. The inverter control device according to claim 1,
wherein the computation means includes means for storing results of computation in the parameter means as a parameter.

4. The inverter control device according to claim 1,
wherein the computation means carries out at least one computation block in which various computation processing methods are defined in synchronization with the processing cycle.

5. The inverter control device according to claim 4,
wherein the computation block carried out by the computation means includes a computation block that performs output to the drive control means using the computation processing results of the computation means instead of fixed value data stored in the parameter means.

6. The inverter control device according to claim 1,
wherein the processing means references processing configuration information that designates the processing cycle of each processing and that is processing configuration information in which various processings carried out in the computation means are defined, and allows each processing to be carried out in the computation means by synchronizing to the processing cycle designated by the processing cycle information.

7. The inverter control device according to claim 1,
wherein the processing means has a function of calculating a necessary time for processing of the computation means from a type and number of computation process carried out by the computation means, processing time for each type of computation process stored in advance and an integer multiple that is a comparison of the processing cycle and the control cycle, and outputting a warning in a case where the necessary time exceeds the time set in advance.

8. The inverter control device according to claim 1,
wherein the processing cycle of the computation means switches according to the number of computation blocks that are the targets to be carried out.

9. A peripheral device for an inverter control device which is able to set parameters of the inverter control device, including drive control means for repeatedly performing operation control of an inverter based on input data and an operation state of the inverter in synchronization with a control cycle; external input means for making an externally input signal into input data of the drive control means; external output means for externally outputting output data of the drive control means; parameter means for storing data used by the drive control means for operation control of the inverter; communication means for performing communication for externally inputting and outputting commands for inverter control and a state quantity of the inverter; and computation means for carrying out computation process using externally input data via the external input means, data output from the drive control means, data stored in the parameter means or data output by the communication means, and supplying processing results thereof to the drive control means, in which processing means for carrying out the drive control means carries out processing of the computation means in synchronization with the processing cycle set to an integer multiple of the control cycle of the drive control means, the peripheral device comprising:
a function of calculating a necessary time for processing of the computation means from a type and number of computation processes carried out by the computation means, a processing time for each type of computation process stored in advance, and an integer multiple that is a ratio of the processing cycle and the control cycle, and outputting a warning in a case where the necessary time exceeds the time set in advance.
